# EUROPÄISCHE PATENTSCHRIFT

(11) **EP 0 425 928 B1**
(45) Veröffentlichungstag und Bekanntmachung des Hinweises auf die Patenterteilung: **10.08.1994**
(21) Anmeldenummer: 90120075.8
(22) Anmeldetag: 19.10.1990
(51) Int. Cl.: B29C 51/00, B29C 43/00, B29C 67/24

(54) **Verfahren zum Herstellen von Formkörpern durch Tiefziehen von vorgefertigten PUR-Teilen auf Basis von Polyisocyanat-Polyadditionsprodukten**
Method of making shaped articles by deep-drawing preformed PU parts based on polyisocyanate addition products
Procédé pour la fabrication d'articles formés par emboutissage de préformes en polyuréthane obtenus à partir de produits d'addition de polyisocyanate

(30) Priorität: 01.11.1989 DE 3936294; 25.09.1990 DE 4030282
(43) Veröffentlichungstag der Anmeldung: 08.05.1991
(73) Patentinhaber: BAYER AG, 51368 Leverkusen (DE)
(72) Erfinder: Wagner, Joachim, Dr., W-5000 Köln 80 (DE); Elsner, Thomas, Dr., W-4000 Düsseldorf 13 (DE); Rasshofer, Werner, Dr., W-5000 Köln 80 (DE); Faehndrich, Jürgen, Dr., W-5090 Leverkusen 1 (DE); Jürgens, Eberhard, Dr., W-5000 Köln 60 (DE)

(56) Entgegenhaltungen:
- EP-A- 0 348 760
- DE-A- 3 700 246
- MODERN PLASTICS INTERNATIONAL. Bd. 14, Nr. 2, Februar 1984, LAUSANNE CH Seiten 28 - 30; GEORGE R. SMOLUK: 'This cup holds a new opportunity'
- PATENT ABSTRACTS OF JAPAN vol. 11, no. 210 (M-604)(2657) 8. Juli 1987 & JP-A-62 027 118 (SHOWA ELECTRIC WIRE & CABLE CO LTD) 5. Februar 1987

## Beschreibung

Die Erfindung betrifft ein Verfahren zum Herstellen von Formkörpern durch Tiefziehen von vorgefertigten PUR-Teilen auf Basis von Polyisocyanat-Polyadditionsprodukten einer Dichte von mindestens 0,8 g/cm³, wobei das PUR-Teil in eine Tiefziehform eingelegt und bei einer Temperatur bis zu 230°C und einem Druck bis zu 1.000 bar, vorzugsweise bis zu 300 bar, verpreßt wird.

Auf diese Weise (EP-A-0 334 171, EP-A-0 310 896) hat man beispielsweise im RIM-Verfahren (Reaction-Injection-Molding) hergestellte, gegebenenfalls mit Glasfasern verstärkte PUR-Teile zu Formkörpern tiefgezogen. Dabei wurde der tiefgezogene Formkörper anschließend in der Tiefziehform unter Druck abgekühlt und erst danach entformt. Diese Verfahrensweise benötigt sehr lange Zykluszeiten, da insbesondere bei der Fertigung großer Formkörper lange Abkühlzeiten eingehalten werden müssen.

Das Sintern von vernetzten Polyisocyanat-Polyadditionsprodukten mit einer durchschnittlichen Teilchengröße von kleiner als 0,25 mm in einem Formwerkzeug bei Temperaturen von 100 bis 300°C und unter einem Druck von größer als 50 bar, ist bereits aus der DE-A-3 700 246 bekannt.

Gemäß JP-A-62-27 118 gelingt es, Polyimidharz-Tabletten unter Druck zu verformen und ohne Abkühlung in der Form zu entfernen.

Es besteht die Aufgabe, das bekannte Verfahren (EP-A-0 334 171, EP-A 0 310 896) dahingehend zu verbessern, daß die Zykluszeiten verringert werden.

Dies wird dadurch erreicht, daß der erzeugte Formkörper nach dem Tiefziehvorgang einer Verweilzeit von mindestens 10 sec unter Aufrechterhaltung dieser Temperatur und einem Druck bis 1.000 bar, vorzugsweise bis 300 bar, unterworfen und unmittelbar anschließend entformt wird.

Auf eine Abkühlung des Formkörpers unter Druck innerhalb der Tiefziehform wird nach diesem neuen Verfahren der Heißentformung also verzichtet. Er kühlt erst anschließend außerhalb der Tiefziehform ab. Mit dieser - für den Fachmann an sich widersprüchlichen - Verfahrensweise werden zur Überraschung bei erheblich herabgesetzten Zykluszeiten nachschrumpffreie Formkörper erhalten. Die untere Temperaturgrenze liegt normalerweise um 100°C. Der bevorzugte Temperaturbereich liegt zwischen 160 und 190°C; besonders bevorzugt ist der Temperaturbereich zwischen 180 und 190°C.

Vorzugsweise beträgt die Preßzeit 2 bis 10 min, besonders bevorzugt 3 bis 5 min.

Als Polyisocyanat-Polyadditionsprodukte verwendet man solche, die durch Umsetzung von
a) aromatischen Polyisocyanaten,
b) Verbindungen mit einem Molekulargewicht zwischen 1.800 und 12.000, welche im statistischen Mittel mindestens 2,5 gegenüber Isocyanatgruppen reaktionsfähige Gruppen aufweisen,
gegebenenfalls
c) Diaminen mit zwei primären und/oder sekundären, aromatisch gebundenen Aminogruppen des Molekulargewichtsbereichs 108 bis 400,
sowie gegebenenfalls
d) Ethergruppen aufweisenden (Cyclo)alkanpolyolen oder (Cyclo)alkanpolyaminen des Molekulargewichtsbereichs 60 bis 1.799,
sowie gegebenenfalls unter Mitverwendung von
e) den aus der Polyurethanchemie an sich bekannten Hilfs- und Zusatzmitteln
unter Einhaltung einer Isocyanatkennzahl von 60 bis 140 im Ein- oder Mehrstufenverfahren hergestellt worden sind, mit der Maßgabe, daß mindestens eine der Komponenten c) oder d) in einer solchen Menge mitverwendet wird, daß die Gesamtmenge der Komponenten c) und d) mindestens 5 Gew.-%, bezogen auf das Gewicht der Komponente b), beträgt.

Bei den bei der Herstellung der Polyisocyanat-Polyadditionsprodukte gegebenenfalls mitzuverwendenden Hilfs- und Zusatzmitteln e) handelt es sich beispielsweise um innere Formtrennmittel, Katalysatoren für die Polyisocyanat-Polyadditionsreaktion, Treibmittel, oberflächenaktive Zusatzstoffe, Zellregler, Pigmente, Farbstoffe, Flammschutzmittel, Stabilisatoren, Weichmacher oder fungistatisch bzw. bakteriostatisch wirkende Substanzen, wie sie beispielsweise in EP-B-0 081 701, Spalte 6, Zeile 40, bis Spalte 9, Zeile 31, beispielhaft beschrieben sind.

Zu den bevorzugten, gegebenenfalls mitzuverwendenden Hilfs- und Zusatzstoffen gehören die an sich bekannten Füll- und/oder Verstärkungsstoffe, wie beispielsweise Bariumsulfat, Kieselgur, Schlämmkreide, Mica oder insbesondere Glasfasern, LC-Fasern, Glasflakes, Glaskugeln oder Kohlefasern, wobei diese Füll- und/oder Verstärkungsstoffe in Mengen von bis zu 80 Gew.-%, vorzugsweise bis zu 30 Gew.-%, bezogen auf das Gesamtgewicht der gefüllten bzw. verstärkten Polyisocyanat-Polyadditionsprodukte, mitverwendet werden können.

Die Ausgangsmaterialien des erfindungsgemäßen Verfahrens können in Form von Halbzeugen - in flächiger Form - oder in Form von Klein- und Kleinstteilen vorliegen.

In flächiger Form sind auch Laminate mit Füll- und Verstärkungsmaterialien geeignet; der schichtförmige Aufbau solcher Laminate kann in DE-A-3 809 524, Seite 12, Zeile 31, bis Seite 14, Zeile 13, nachgelesen werden.

Die Durchführung des erfindungsgemäßen Verfahrens, d.h. die durch Einwirkung von Druck und Temperatur bewirkte Verarbeitung der Polyisocyanat-Polyadditionsprodukte, kann unter Verwendung beliebiger, hierfür geeigneter, bekannter Apparaturen, wie beispielsweise Tiefzieh-Pressen, erfolgen. Bei der Durchführung des erfindungsgemäßen Verfahrens kommt es jedoch nicht zu einem Aufschmelzen des Materials, wie es von im eigentlichen Sinne "thermoplastischen" Kunststoffen bekannt ist; eine flüssige, relative niederviskose, makroskopische Phase wird zu keinem Zeitpunkt eingenommen. Geeignete Verfahren zur Thermoverformung werden z.B. von H. Käufer in "Maschinenmarkt" 88 (1982), Vogel-Verlag, Würzburg, Seiten 1068 bis 1071, beschrieben.

Das erfindungsgemäße Verfahren gestattet die Herstellung von Formkörpern in Form von Hohlkörpern für Einsätze, Becher, Behälter verschiedener Abmessungen und Inhalte; als Abdeckungen für Armaturentafeln, Schaltkonsolen, Lenksäulenabdeckungen; für flächenförmige Fahrzeugkarosserieelemente, wie Türblätter, Seitenteile, Kotflügel oder Motorraum- oder Kofferraumhauben, sowie zur Herstellung von Radkappen, Sitzschalen oder Rückenlehnen. In flächiger Form eignen sich die erfindungsgemäßen Verfahrensprodukte auch als Schreibunterlagen, Anzeigetafeln mit Magnethalterungen, Klebeschildern, Schutzfolien und Beschichtungen für die verschiedensten Zwecke. Die erfindungsgemäßen Verfahrensprodukte können auch in Form von Sitzschalen, Rückenlehnen, Kisten, Bechern, Schalenkoffern und ähnlichen Behältern; Konstruktionsteilen für Karosserien, Fahrgestelle; Versteifungselementen, Profilen, wie z.B. Rahmen, Träger; steifen Karosserieaußenteilen, wie Kotflügeln oder Motorraum- bzw. Kofferraumhauben, Radkappen, Radkastenauskleidungen; Versteifungselementen für Blenden, Kraftfahrzeug-Türinnenverkleidungen, Türen, Klappen, Decken und ähnlichen Artikeln Verwendung finden. Sie können auch mit Holz und ähnlichem verpreßt werden und im Innenraum von Fahrzeugen Verwendung finden. Sie eignen sich ferner für Artikel im Freizeitbereich.

Erfindungsgemäße Verfahrensprodukte können außerdem in Form von kleinen Formteilen als Tastaturelemente, hartelastische Dichtungsteile und Manschetten, Griffmulden und Griffkörper; kleinen Dämpfungselementen oder Unterleg- bzw. Distanzscheiben Verwendung finden; ferner für versteifte oder unversteifte Profile für Kabelkanäle und Dichtungslippen oder für beliebige andere, massive kleine Körper.

### Beispiel 1

Eine Platte mit den Maßen 350 x 350 x 4 mm wurde im RIM-Verfahren aus folgender Rezeptur hergestellt:

### Polyisocyanatkomponente:

NCO-Semiprepolymer mit einem NCO-Gehalt von 19 %, hergestellt durch Umsetzung einer überschüssigen Menge von Ureton-modifiziertem 4,4′-Diisocyanatodiphenylmethan mit einem Polyesterpolyol der OH-Zahl 56 auf Basis von Adipinsäure und einem Gemisch gleicher Gewichtsteile Ethylenglykol und 1,4-Dihydroxybutan.

### Aminopolyether:

Der in nachstehendem Beispiel eingesetzte Aminopolyether weist eine NH-Zahl von 44 auf und wurde durch Hydrolyse der Isocyanatgruppen eines NCO-Prepolymeren des NCO-Gehaltes 3,4 % erhalten. Das NCO-Prepolymer seinerseits wurde durch Umsetzung von 2,4-/2,6-Diisocyanatotoluol (Isomerenverhältnis 80:20) mit einem Polyethergemisch der OH-Zahl 50 erhalten, wobei das Polyethergemisch aus A) einem Polyether der OH-Zahl 35, hergestellt durch Propoxylierung von Glycerin und anschließende Ethoxylierung des Propoxlierungsprodukts (PO:EO-Gewichtsverhältnis = 87:13) und B) einem Polyetherpolyol der OH-Zahl 56 und einer OH-Funktionalität von 2,5, hergestellt durch Propoxylierung eines entsprechenden Gemischs aus Wasser und Trimethylolpropan, bestand. Das NCO/OH-Äquivalentverhältnis bei der Herstellung der NCO-Prepolymeren lag bei 2:1.

### DETDA:

Ein Gemisch aus 65 % 1-Methyl-3,5-diethyl-2,4-diaminobenzol und 35 % 1-Methyl-3,5-diethyl-2,6-diaminobenzol.

### Inneres Formtrennmittel:

Ein handelsübliches inneres Formtrennmittel (PU 0733 A der Bayer AG, D-5090 Leverkusen).

### Rizinusöl

62 Teile des Aminopolyethers, 30 Teile DETDA, 6 Teile inneres Formtrennmittel und 2 Teile Rizinusöl werden zu einer "Reaktivkomponente" vermischt.

Unter Verwendung einer Hochdruckkolbendosieranlage der Firma Maschinenfabrik Hennecke GmbH, D-5205 St. Augustin, wird diese Reaktivkomponente mit der oben genannten Polyisocyanatkomponente unter Einhaltung einer Isocyanatkennzahl von 105 verarbeitet. Als Werkzeug diente eine Plattenform der Maße 350 x 350 x 4 mm aus Stahl, deren Innenwände vor Befüllen mit einem handelsüblichen äußeren Formtrennmittel beschichtet worden ist (®Chemtrend RCTW 2006 der Firma Chemtrend).

### Verarbeitungsbedingungen;

Verarbeitungsdruck: 200/200 bar
Temperatur der Reaktivkomponente: 60°C
Temperatur der Polyisocyanatkomponente: 50°C
Formtemperatur: 65°C
Formstandzeit: 30 sec
Diese Platte wurde in einem Heizschrank bei 180°C vorgewärmt und sofort anschließend in einer Tiefziehform bei einer Preßtemperatur von 180°C verformt. Der eigentliche Tiefziehvorgang dauerte 25 sec. Anschließend ließ man den tiefgezogenen Formkörper in der Tiefziehform 5 min lang unter der gleichen Temperatur und einem Druck von 200 bar verweilen, entformte ihn dann heiß und ließ ihn außerhalb der Tiefziehform abkühlen. Der Formkörper zeigte keinen Rückschrumpf. Die Zykluszeit betrug 6 min.

### Vergleichsbeispiel 1

Verwendet wurde die gleiche Platte wie im Beispiel 1. Sie wurde ebenfalls auf 180°C in einem Heizschrank vorgewärmt und anschließend in einer Tiefziehform bei 180°C verpreßt. Dieser Tiefziehvorgang dauerte 25 sec.Die Druck- und Temperaturbedingungen wurden noch 5 min aufrechterhalten. Anschließend wurde der Formkörper über eine Zeitspanne von 10 min unter Aufrechterhaltung des Druckes in der Tiefziehform abgekühlt. Die Zykluszeit betrug 16 min.

### Beispiel 2

Eine Platte mit den Maßen 350 x 350 x 4 mm wurde im RIM-Verfahren aus folgender Ruß enthaltenden Rezeptur hergestellt:

### Polyaminkomponente

### Bei der nachstehend eingesetzten Polyaminkomponente handelt es sich um ein Gemisch aus

67 Teilen eines Aminopolyethers der NH-Zahl 44, hergestellt durch Hydrolyse eines NCO-Prepolymeren bei 90°C unter Verwendung eines Gemisches aus 3500 Gew.-Teilen Dimethylformamid, 0,1 Gew.-Teilen Natriumhydroxid und 100 Gew.-Teilen Wasser pro 1000 Gew.-Teilen des Prepolymeren und anschließender destillativer Entfernung der flüchtigen Bestandteile. Das NCO-Prepolymer wies einen NCO-Gehalt von 3,4 % auf und wurde durch Umsetzung von 2,4-Diisocyanatotoluol mit einer überschüssigen Menge eines Polyethergemisches erhalten. Das Polyethergemisch bestand zu gleichen Gewichtsteilen aus (i) dem Propoxylierungsprodukt der OH-Zahl 56 und der OH-Funktionalität 2,4 eines Gemisches aus Wasser und Trimethylolpropan und (ii) einem Polyetherpolyol der OH-Zahl 35, hergestellt durch Propoxylierung von Glycerin und anschließende Ethoxylierung des Propoxylierungsproduktes (Gewichtsverhältnis PO:EO = 87:13),
26 Teilen eines Gemisches aus 65 Teilen 1-Methyl-3,5-diethyl-2,4-diaminobenzol und 35 Teilen 1-Methyl-3,5-diethyl-2,6-diamino-benzol,
5 Teilen Polyricinolsäure mit einer < 5 liegenden Säurezahl,
1 Teil L 5304 der Fa. Union Carbide (Polyetherpolysiloxan-Stabilisator).
1 Teil Ruß
3 Teile inneres Trennmittel PU 0733 A der Bayer AG, D-5090 Leverkusen.

In diese klare Lösung aus den angegebenen Komponenten werden 42,4 Teile gemahlene Kurzglasfasern (MF 7901 der Bayer AG) eingerührt.

### Polyisocyanatkomponente:

### Gemisch aus

50 Teilen eines modifizierten 4,4′-Diisocyanatodiphenylmethans mit einem NCO-Gehalt von 19 %, hergestellt durch Umsetzung von 4,4′-Diisocyanatodiphenylmethan mit einem Polyester der OH-Zahl 56 aus Adipinsäure, Ethylenglykol und 1,4-Butandiol mit Mol-Verhältnis 1:1 und
50 Teilen eines Polyisocyanatgemisches der Diphenylmethanreihe mit einem NCO-Gehalt von 31 %, bestehend aus
66 % 4,4′-Diisocyanatodiphenylmethan, 2 % 2,4′-Diisocyanatodiphenylmethan und 32 % höherfunktionellen Homologen dieser Diisocyanate.

Die Polyamin- und Polyisocyanat-Komponente werden unter Einhaltung eines Gewichtsverhältnisses von 100:49 (NCO-Kennzahl = 110) einem Hochdruckaggregat zugeführt und nach intensiver Vermischung in einem zwangsgesteuerten Mischkopf in kürzester Zeit in ein temperierbares Metallwerkzeug eingefüllt, dessen Forminnenwandungen, wie unten beschrieben, behandelt wurden. Das Plattenwerkzeug aus Stahl erlaubt die Herstellung von Prüfplatten der Abmessungen 350 x 350 x 4 mm. Das Befüllen des Werkzeuges erfolgte von der Längsseite über einen Stangenanguß.

Diese Platte wurde in einem Heizschrank auf 170°C vorgewärmt und sofort anschließend in einer Tiefziehform bei einer Preßtemperatur von 170°C verformt. Der eigentliche Tiefziehvorgang dauerte 25 sec. Anschließend ließ man den tiefgezogenen Formkörper in der Tiefziehform unter den gleichen Temperatur- und Druckbedingungen 5 min lang verweilen, entformte ihn dann heiß und ließ ihn außerhalb der Tiefziehform abkühlen. Der Formkörper zeigte keinen Rückschrumpf. Die Zykluszeit betrug 6 min.

### Vergleichsbeispiel 2

Verwendet wurde die gleiche Platte wie in Beispiel 2; sie wurde unter den gleichen Bedingungen wie im Beispiel 2 vorbehandelt und tiefgezogen. Druck und Temperatur wurden anschließend 5 min aufrechterhalten und der Formkörper sodann unter Aufrechterhaltung des Druckes über eine Zeitspanne von 8 min innerhalb der Tiefziehform abgekühlt. Die Zykluszeit betrug 14 min.

## Patentansprüche

1. Verfahren zum Herstellen von Formkörpern durch Tiefziehen von vorgefertigten PUR-Teilen auf Basis von Polyisocyanat-Polyadditionsprodukten einer Dichte von mindestens 0,8 g/cm³, wobei das PUR-Teil in eine Tiefziehform eingelegt und bei einer Temperatur bis zu 230°C und einem Druck bis zu 1.000 bar, vorzugsweise bis zu 300 bar, verpreßt wird, dadurch gekennzeichnet, daß der erzeugte Formkörper nach dem Tiefziehvorgang einer Verweilzeit von mindestens 10 sec unter Aufrechterhaltung dieser Temperatur und einem Druck bis zu 1.000 bar, vorzugsweise bis zu 300 bar, unterworfen und unmittelbar anschließend entformt wird.

2. Verfahren nach Anspruch 1, dadurch gekennzeichnet, daß die Preßzeit 2 bis 10 min beträgt.

3. Verfahren nach Anspruch 2, dadurch gekennzeichnet, daß die Preßzeit 3 bis 5 min beträgt.

## Claims

1. Process for the production of mouldings by thermoforming pre-fabricated PUR parts based on polyisocyanate addition products of a density of at least 0.8 g/cm³, wherein the PUR part is placed in a thermoforming mould and pressed at a temperature of up to 230°C and a pressure of up to 1,000 bar, preferably of up to 300 bar, characterized in that, after the thermoforming operation, the resultant moulding is held for a residence time of at least 10 seconds at this temperature and a pressure of up to 1,000 bar, preferably of up to 300 bar, and is demoulded immediately thereafter.

2. Process according to claim 1, characterized in that the pressing time is 2 to 10 minutes.

3. Process according to claim 2, characterized in that the pressing time is 3 to 5 minutes.

## Revendications

1. Procédé de production d'articles façonnés par emboutissage de préformes en polyuréthanne à base de produits de polyaddition de polyisocyanate de masse volumique au moins égale à 0,8 g/cm³, dans lequel l'article en polyuréthanne est inséré dans une forme d'emboutissage et pressé à une température allant jusqu'à 230°C et à une pression allant jusqu'à 1000 bars, de préférence jusqu'à 300 bars, caractérisé en ce que l'article façonné produit est soumis à un processus d'emboutissage d'une durée d'au moins 10 secondes avec maintien de cette température et sous une pression allant jusqu'à 1000 bars, de préférence jusqu'à 300 bars, et est éjecté immédiatement après.

2. Procédé suivant la revendication 1, caractérisé en ce que le temps de maintien sous pression est de 2 à 10 minutes.

3. Procédé suivant la revendication 2, caractérisé en ce que le temps de maintien sous pression est de 3 à 5 minutes.
